**Europäisches Patentamt**

**European Patent Office**

**Office européen des brevets**

(19)

(11) Numéro de publication : **0 511 032 A1**

## (12) DEMANDE DE BREVET EUROPEEN

(21) Numéro de dépôt : **92400749.5**

(22) Date de dépôt : **20.03.92**

(51) Int. Cl.⁵ : **F02M 29/14,** F02M 29/04, F01L 3/06

(30) Priorité : **23.04.91 FR 9104978**

(43) Date de publication de la demande :
**28.10.92 Bulletin 92/44**

(84) Etats contractants désignés :
**DE ES GB IT**

(71) Demandeur : **REGIE NATIONALE DES USINES RENAULT S.A.**
**34, Quai du Point du Jour**
**F-92109 Boulogne Billancourt (FR)**

(72) Inventeur : **Marie, Jean-Jacques**
**97 Bis, rue Ecuyère**
**F-76000 Rouen (FR)**

(54) **Culasse pour moteur à combustion interne.**

(57)     Culasse de moteur à combustion interne comportant au moins un conduit d'admission (3) en mélange air-carburant débouchant dans une chambre de combustion (2) par un siège (7) sur lequel peut s'appliquer une soupape (9), caractérisée en ce que le conduit d'admission (3) est muni de moyens déchireurs (8) du film de carburant (61) qui se dépose sur les parois dudit conduit (3) pour en favoriser la vaporisation lors de l'admission des gaz dans la chambre de combustion (2).

FIG. 1

EP 0 511 032 A1

La présente invention a pour objet une culasse de moteur à combustion interne.

Elle vise particulièrement une culasse de moteur à combustion interne à injection indirecte multipoint.

Les moteurs à combustion interne à injection indirecte multipoint comportent un injecteur de carburant par cylindre, cet injecteur débouchant dans le conduit d'admission, encore appelé pipe d'admission, à proximité de la soupape d'admission.

Lors de l'injection, une certaine quantité de carburant se dépose sous forme de film sur les parois du conduit d'admission au voisinage du siège de soupape, et cela plus particulièrement lors d'un fonctionnement du moteur à froid et/ou à bas régime. A l'ouverture de la soupape, le film de carburant entraîné par les gaz, s'écoule le long des parois vers la chambre de combustion et pénètre dans la chambre de combustion sous la forme d'un film de carburant. L'introduction d'un tel film de carburant directement dans la chambre de combustion produit des effets néfastes sur la combustion et engendre une pollution importante de moins en moins tolérable du fait de la sévérisation des normes antipollution.

Le but de la présente invention est donc de proposer une culasse qui supprime la possibilité d'introduction d'un film de carburant s'écoulant des parois du conduit d'admission dans la chambre de combustion.

La culasse selon l'invention pour moteur à combustion interne, comporte au moins un conduit d'admission en mélange air-carburant débouchant dans une chambre de combustion par un siège sur lequel peut s'appliquer une soupape.

Selon l'invention la culasse est caractérisée en ce que le conduit est muni de moyens déchireurs du film de carburant, qui se dépose sur les parois du conduit d'admission, pour en favoriser la vaporisation lors de l'admission des gaz dans la chambre de combustion.

La culasse selon l'invention est destinée à équiper plus particulièrement les moteurs à combustion interne à injection multipoint indirecte où le problème de dépose de film de carburant sur les parois des conduits d'admission se pose le plus cruellement.

Selon une caractéristique de l'invention les dits moyens déchireurs sont constitués par une pluralité d'aspérités disposées en saillie à l'intérieur du conduit d'admission, au voisinage du siège de soupape.

Selon une autre caractéristique de l'invention lesdites aspérités sont formées d'au moins une rangée de dents disposées annulairement.

Selon une autre caractéristique de l'invention lesdites dents ont une section circulaire.

Selon une autre caractéristique de l'invention lesdites dents ont une section comprise entre 0,1 mm et 0,5 mm, une hauteur comprise entre 0,1 mm et 1 mm et un espacement entre de deux dents consécutives évoluant entre 0,1 mm et 1 mm.

Selon une autre caractéristique de l'invention lesdites aspérités sont portées par une collerette rapportée, disposée sous le siège de soupape.

Selon une autre caractéristique de l'invention lesdites aspérités sont portées directement par le siège de soupape.

Selon une autre caractéristique de l'invention lesdites aspérités coopèrent avec des moyens d'actionnement de manière à être mobiles entre une première position, où elles sont en saillies à l'intérieur du conduit d'admission, et une seconde position où les aspérité sont logées dans des cavités adéquates en retrait du conduit d'admission, l'actionnement des aspérités étant piloté par des moyens de commande à partir du fonctionnement du moteur, ainsi les aspérités peuvent être rétractées au-dessus d'un certain régime moteur.

On comprendra mieux les buts, aspects et avantages de la présente invention, d'après la description donnée ci-après d'un mode de réalisation de l'invention, donné à titre d'exemple non limitatif, en se référant au dessin annexé, dans lequel :

la figure 1 est une vue schématique partielle montrant une culasse selon l'invention pour moteur à combustion interne ;

la figure 2 est une vue de dessous de l'orifice de sortie du conduit d'admission représenté à la figure 1 ;

la figure 3 est une vue schématique montrant le déchirement du film de carburant.

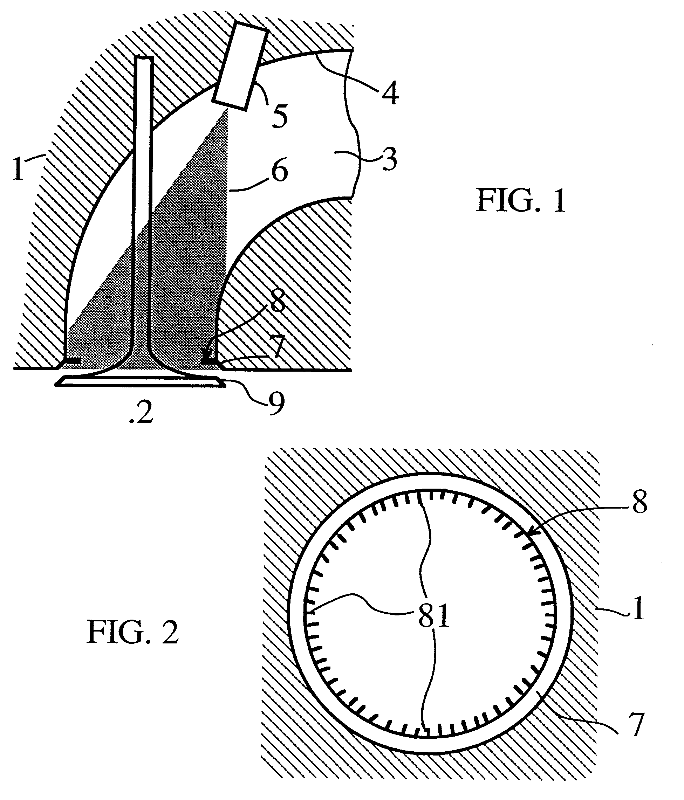

Conformément à la figure 1 la culasse (1) pour moteur à combustion interne figurée concerne un moteur à injection d'essence indirecte multipoint. Seuls ont été figurés les éléments de la culasse intéressant l'invention, à savoir schématiquement un conduit d'admission (3) débouchant dans une chambre de combustion (2) cylindrique définie dans le carter moteur, non figuré, s'étendant sous la culasse.

Le conduit (3) débouche dans la chambre de combustion par un siège (7) sur lequel peut s'appliquer une soupape (9). ce siège est classiquement un siège rapporté, monté fretté dans la culasse. Un injecteur (5) de carburant est logé dans la culasse à proximité de la soupape d'admission, de sorte que le jet de carburant soit dirigé vers l'orifice d'admission.

Au voisinage immédiat du siège de soupape (7) sont disposés des moyens pour déchirer le film de carburant sous la forme d'une collerette (8).

Cette collerette (8) rapportée est constituée par une bague annulaire insérée sous le siège (7) de soupape lors du montage de ce dernier. la collerette présente, conformément à l'invention, sur sa face interne, prolongeant les parois du conduit d'admission, des aspérités formées par une série de dents (81) en saillie vers l'intérieur du conduit. Ces dents sont disposées sur une rangée et s'étendent annulairement tout autour du conduit d'admission.

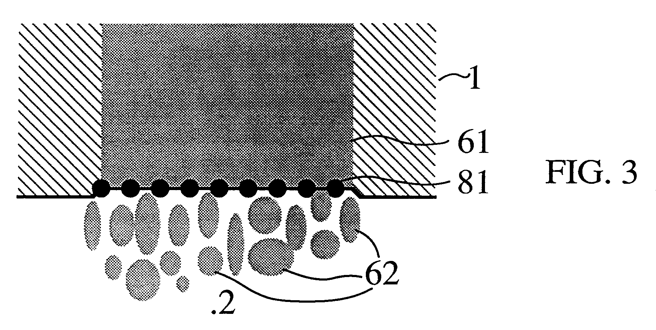

Conformément à ce qui vient d'être décrit et conformément à la figure 3 le fonctionnement de l'invention est le suivant.

Lors de l'injection une certaine quantité de carburant se dépose sous forme de film (61) sur les parois (4) du conduit d'admission (3) au voisinage du siège (7), et cela plus particulièrement lors d'un fonctionnement du moteur à froid ou à bas régime. A l'ouverture de la soupape, le film de carburant entraîné par les gaz, s'écoule le long des parois vers la chambre de combustion (2) et passe à travers les dents (81) en saillie bordant le siège (7). Le film (61) se déchire alors en une multitude de gouttelettes (62) qui se vaporisent dans le flux gazeux, et ne perturbent pas la combustion.

La hauteur idéale des aspérités ou dents (81) doit être égale à l'épaisseur du film de carburant. Cette dimension est nécessaire tout d'abord, pour le déchirement du film qui doit se faire sur toute l'épaisseur, et pour l'écoulement gazeux qui doit être laminaire pour ne pas grever la perméabilité par des turbulences inutiles. Comme l'épaisseur de la couche limite dépend de la vitesse du fluide, liée à la pression qui règne dans le conduit d'admission, ainsi que de la quantité de carburant injecté, celle-ci n'est donc pas constante. La hauteur moyenne utile des dents (81) est donc à déterminer pour chaque type de culasse au banc d'essai. On choisira toutefois de manière privilégiée cette hauteur entre 0,1 mm et 1 mm.

La section des dents (81) doit être aussi faible que possible, la longévité et la résistance mécanique en sont les impératifs principaux, la plus simple et la moins résistante étant la section circulaire on choisira donc de manière privilégiée des dents de section circulaire. Le diamètre de ces dents, compris entre 0,1 mm et 0,5 mm, pourra être optimiser au banc d'essai.

L'espacement entre deux dents (81) consécutives doit être suffisamment faible pour déchirer finement le film de carburant (61) mais sans toutefois constituer un obstacle par création d'un effet Venturi. Là encore seules des mesures au bans d'essai permettront de déterminer l'espacement optimum en fonction de la culasse considérée. On choisira cet espacement entre 0,1 mm et 1 mm.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leur combinaisons si celles-ci sont effectuées suivant son esprit.

Ainsi la forme et la position des aspérités peuvent évoluer, il est ainsi possible de disposer deux rangées et plus de dents, de même la façon d'implanter ces aspérités en saillie à l'intérieur du conduit d'admission peut être modifiée par exemple en les intégrant directement au siège de soupape.

Il est également possible de rendre les aspérités mobiles par exemple sous l'action d'un fluide, de manière à faire varier la hauteur de ces aspérités soit de manière discrète entre une première position où elles sont en saillies à l'intérieur du conduit d'admission et une seconde position où les aspérités sont rentrées dans des cavités adéquates en retrait du conduit d'admission, soit encore de manière continue. L'actionnement des aspérités étant alors piloté par des moyens de commande à partir du fonctionnement du moteur, ainsi les aspérités normalement en saillie peuvent être rétractées dans leur cavités au-dessus d'un certain régime moteur.

## Revendications

[1] Culasse de moteur à combustion interne comportant au moins un conduit d'admission (3) en mélange air-carburant débouchant dans une chambre de combustion (2) par un siège (7) sur lequel peut s'appliquer une soupape (9), caractérisée en ce que le conduit d'admission (3) est muni de moyens déchireurs (8) du film de carburant (61) qui se dépose sur les parois dudit conduit (3) pour en favoriser la vaporisation lors de l'admission des gaz dans la chambre de combustion (2).

[2] Culasse de moteur selon la revendication 1, destinée à équiper plus particulièrement des moteurs à combustion interne à injection multipoint indirecte, caractérisée en ce que lesdits moyens déchireurs (8) sont constitués par une pluralité d'aspérités (81) disposées en saillie à l'intérieur du conduit d'admission (3), au voisinage du siège (7) de soupape.

[3] Culasse de moteur selon la revendication 2, caractérisée en ce que lesdites aspérités sont formées d'au moins une rangée de dents (81) disposées annulairement.

[4] Culasse de moteur selon la revendication 3, caractérisée en ce que lesdites dents (8) ont une section circulaire.

[5] Culasse de moteur selon l'une quelconque des revendications 3 à 4, caractérisée en ce que lesdites dents ont une section comprise entre 0,1 mm et 0,5 mm, une hauteur comprise entre 0,1 mm et 1 mm et un espacement entre de deux dents consécutives évoluant entre 0,1 mm et 1 mm.

[6] Culasse de moteur selon l'une quelconque des revendications 2 à 5, caractérisée en ce que lesdites aspérités (81) sont portée par une collerette (8) rapportée.

[7] Culasse de moteur selon l'une quelconque des revendications 2 à 6, caractérisée en ce que lesdites aspérités sont portées directement par le siège de soupape.

[8] Culasse de moteur selon l'une quelconque des revendications 2 à 5, caractérisée en ce que lesdites aspérités coopèrent avec des moyens d'actionnement de manière à être mobiles entre une première position où elles sont en saillies à l'intérieur du conduit d'admission et une seconde position où les aspérités sont logées dans des cavités adéquates en retrait du conduit d'admission, l'actionnement des aspérités étant piloté par des moyens de commande à partir du fonctionnement du moteur, ainsi les aspérités peuvent être rétractées au-dessus d'un certain régime moteur.

FIG. 1

FIG. 2

FIG. 3

**Office européen des brevets**

# RAPPORT DE RECHERCHE EUROPEENNE

Numero de la demande

EP 92 40 0749

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-1 310 028 (REGIE NATIONALE DES USINES RENAULT) <br> * figures * | 1,2,6 | F02M29/14 <br> F02M29/04 <br> F01L3/06 |
| A | FR-A-2 595 120 (ANDREA STIHL) <br> * page 4, ligne 6 - ligne 18 * <br> * page 7, ligne 26 - page 12, ligne 26; figures * | 1,2 | |
| A | GB-A-2 133 470 (VAPOSTAT FUEL) <br> * page 2, ligne 45 - ligne 113; figures * | 1,3 | |

**DOMAINES TECHNIQUES RECHERCHES (Int. Cl.5)**

F02M
F01L
F02F

Le présent rapport a été établi pour toutes les revendications

| Lieu de la recherche | Date d'achèvement de la recherche | Examinateur |
|---|---|---|
| LA HAYE | 28 AVRIL 1992 | MOUTON J.M.M.P. |